Europäisches Patentamt

European Patent Office

Office européen des brevets

(11) Numéro de publication : **0 319 410 B1**

(12) **FASCICULE DE BREVET EUROPEEN**

(45) Date de publication du fascicule du brevet :
18.03.92 Bulletin 92/12

(21) Numéro de dépôt : **88403022.2**

(22) Date de dépôt : **30.11.88**

(51) Int. Cl.⁵ : **F16L 3/22**

(54) **Dispositif pour le support d'objets allongés, tels que câbles ou tubes.**

(30) Priorité : **04.12.87 FR 8716896**

(43) Date de publication de la demande :
**07.06.89 Bulletin 89/23**

(45) Mention de la délivrance du brevet :
**18.03.92 Bulletin 92/12**

(84) Etats contractants désignés :
**BE DE GB IT**

(56) Documents cités :
**WO-A-87/00256**
**DE-C- 692 091**
**GB-A- 2 168 544**
**US-A- 2 577 120**
**US-A- 3 357 455**

(73) Titulaire : **AEROSPATIALE SOCIETE**
**NATIONALE INDUSTRIELLE Société**
**Anonyme dite:**
**37, Boulevard de Montmorency**
**F-75016 Paris (FR)**

(72) Inventeur : **Cuxac, Gérard**
**39 Rue de la République**
**F-30400 Villeneuve-Lez-Avignon (FR)**

(74) Mandataire : **Bonnetat, Christian et al**
**CABINET BONNETAT 23, Rue de Léningrad**
**F-75008 Paris (FR)**

## Description

La présente invention concerne un dispositif pour le support d'objets allongés, tels que des câbles, des faisceaux de câbles, des tubes, des tuyaux, des gaines et analogues, qui permet de guider et de maintenir lesdits objets le long d'une structure.

Une application préférentielle, quoique non exclusive, dudit dispositif selon l'invention concerne notamment l'industrie aéronautique, où la présence d'un nombre considérable de câbles, tubes, gaines, etc... destinés à la transmission d'informations par voies fluidique, électrique et optique pour, par exemple, asservir les appareillages d'un aéronef, nécessite l'usage de dispositifs de support pour assurer le cheminement et le maintien desdits objets allongés le long de structures appropriées.

Ces dispositifs de support sont fixés à des structures rigides fixes, telles que des tubes porteurs métalliques, des rails ou des profilés, et sont disposés à intervalles réguliers les uns à la suite des autres, afin de supporter convenablement lesdits objets allongés.

En général, les dispositifs de support, de type connu, comportent un corps qui présente au moins un berceau formant un logement ouvert vers l'extérieur et servant d'appui transversal auxdits objets, un moyen de serrage, tel qu'un collier, lié audit berceau et permettant de solidariser lesdits objets allongés au dispositif correspondant. En fonction du nombre et du type des objets allongés (câbles, tubes, tuyauteries,...) destinés à être supportés par les dispositifs, ainsi que du type de structures portantes (tubes, rails,...), il est donc nécessaire de prévoir une multitude de dispositifs dont chacun desquels répond à une demande précise.

De plus, le corps de chaque dispositif de support est directement fixé à la structure portante par des rivets. Ce mode de fixation présente des inconvénients, notamment dans le cas où la structure portante est un tube métallique, puisqu'il est nécessaire de prévoir des perçages, en général deux, pour le passage des rivets dans ledit tube, ce qui entraîne alors un affaiblissement de sa résistance mécanique, d'autant plus qu'un nombre important de dispositifs doit être disposé, de manière rapprochée, les uns à la suite des autres. Cela implique, pour conséquence, un coût élevé de réalisation puisque des opérations de perçage du tube, de positionnement de chaque dispositif par rapport audit tube, et de mise en place des rivets sont nécessaires.

Par ailleurs, le contrôle ou le remplacement desdits dispositifs, une fois rivetés sur les structures portantes (remplacement pouvant se produire suite à une détérioration des dispositifs ou à une modification du réseau de câblage), est particulièrement difficile puisqu'il est alors nécessaire d'arracher les rivets, ce qui entraîne, outre une intervention longue et coûteuse, l'endommagement desdits dispositifs ainsi que celui des structures portantes.

Aussi, pour remédier à ces inconvénients, on connaît, par le document WO-A-87/00256, un dispositif pour le support d'objets allongés, du type comprenant un corps, composé de deux parties solidarisables l'une à l'autre, par exemple autour d'un tube porteur, et pourvues de logements ouverts vers l'extérieur servant d'appui transversal et de maintien pour les objets allongés.

Bien que facilitant la mise en place et le guidage des objets allongés, ce dispositif ne donne pas entière satisfaction.

Tout d'abord, le verrouillage des deux parties du dispositif, pour empêcher les mouvements transversaux et axiaux l'un par rapport à l'autre, s'avère compliqué et requiert un temps de montage important. En effet, le verrouillage desdites parties du corps comprend, d'une part, un assemblage du type queue d'aronde, agencé perpendiculairement à l'axe longitudinal du tube porteur, et d'autre part, des boulons agencés parallèlement audit axe longitudinal.

De plus, dans ce dispositif, les logements assurent eux-mêmes le serrage des objets allongés par leur propre déformation élastique. Par conséquent, une telle réalisation implique qu'à un logement ayant un diamètre donné s'associe un objet allongé (câble) ayant un diamètre sensiblement égal. Ainsi, il est nécessaire de conformer préalablement les logements desdites parties aux diamètres des objets allongés destinés à être insérés dans ceux-ci.

La présente invention concerne un dispositif du type précité, dont la conception permet notamment de s'affranchir des inconvénients ci-dessus mentionnés.

A cet effet, le dispositif pour le support d'objets allongés, tels que câbles, faisceaux de câbles, tubes, gaines et analogues, du type comportant un corps qui présente au moins un logement ouvert vers l'extérieur et servant d'appui transversal auxdits objets, ledit corps étant constitué de deux parties associables et solidarisables l'une à l'autre, est caractérisé, selon l'invention, en ce que ledit logement est formé par un berceau définissant un V et associé à un moyen de serrage, tel qu'un collier, pour fixer lesdits objets, et lesdites parties sont associables et solidarisables l'une à l'autre uniquement par l'intermédiaire de moyens de verrouillage élastiquement déformables comportant des crochets élastiquement déformables prévus sur au moins l'une des deux parties dudit corps, et qui sont susceptibles de coopérer avec des ergots de retenue correspondants, ménagés sur l'autre desdites parties.

Ainsi, le verrouillage des parties du corps par des crochets et des ergots procure une immobilisation totale desdites parties et une mise en place rapide.

En outre, grâce à l'agencement en V du berceau formant le logement, on peut disposer sur celui-ci un objet allongé ayant un diamètre quelconque, ledit objet allongé étant par la suite lié audit berceau au moyen, par exemple, d'un collier de serrage.

Ainsi, dans le cas où la structure portante est conformée en tube, on peut disposer les deux parties de part et d'autre dudit tube pour les verrouiller directement entre elles, et dans le cas où la structure portante est conformée en rail, l'une des parties est alors fixée audit rail, tandis que l'autre partie, portant lesdits objets allongés, est verrouillée à la partie fixe.

Avantageusement, afin de permettre le démontage aisé des deux parties une fois verrouillées entre elles, celles-ci présentent des encoches autorisant l'accès auxdits crochets élastiquement déformables. Ainsi, un outil approprié peut être introduit dans chaque encoche pour repousser le crochet correspondant de l'ergot de retenue, et désolidariser alors l'une des parties de l'autre.

Dans une application pour laquelle ledit dispositif est destiné à être disposé sur un tube porteur métallique ou analogue, les deux parties du corps peuvent présenter, chacune, une échancrure au moins partiellement circulaire épousant, lorsque les parties sont solidarisées l'une à l'autre, l'extérieur dudit tube. Dans ce cas, et dans un mode préféré de réalisation, ces deux parties sont identiques, chacune d'elles présentant alors au moins un berceau formant un logement ouvert vers l'extérieur et servant d'appui transversal auxdits objets. Une telle réalisation est particulièrement avantageuse puisqu'elle permet de réduire le coût de fabrication desdits dispositifs. En effet, à partir par exemple d'un même moule, on obtient une pièce qui peut constituer l'une ou l'autre desdites parties. Le montage d'un dispositif autour dudit tube s'effectue alors sans difficulté puisqu'on saisit deux parties ou pièces d'un réceptable de stockage de celles-ci, on les dispose de part et d'autre dudit tube, et on les associe l'une à l'autre par lesdits moyens de verrouillage.

Par ailleurs, on peut ainsi agencer un nombre important de câbles, faisceaux de câbles, tubes, etc... puisque chaque partie présente au moins un berceau.

Dans le cas où le dispositif est agencé autour d'un tube, au moins l'une desdites parties comporte au moins un organe de positionnement susceptible de venir coopérer, lors du montage de celle-ci, avec ledit tube. Cet organe permet d'éviter ainsi la rotation du dispositif autour du tube, et le déplacement longitudinal du dispositif par rapport au tube. Dans une réalisation particulière, ledit organe de positionnement est constitué par un pion de centrage susceptible de s'introduire dans un perçage pratiqué dans ledit tube.

Dans une application pour laquelle ledit dispositif est destiné à être disposé sur une surface sensiblement plane, par exemple un rail ou un profilé porteur, l'une desdites parties est conformée en embase fixée à ladite surface, et avec laquelle est susceptible de se solidariser l'autre partie dudit corps présentant ledit berceau. L'embase fait ainsi office de pièce intermédiaire sur laquelle est susceptible d'être montée la partie supportant lesdits objets allongés.

Par conséquent, le corps du dispositif de support peut être constitué soit de deux parties identiques lorsque la structure portante est conformée en un tube ou analogue, soit d'une partie et d'une embase lorsque la structure portante est conformée en un rail ou en un profilé. Grâce à l'invention, on conçoit ainsi deux formes différentes de pièces (une partie et une embase) pour assembler et obtenir un dispositif de support pouvant s'adapter sur la plupart des structures.

Les figures du dessin annexé feront bien comprendre comment l'invention peut être réalisée. Sur ces figures, des références identiques désignent des éléments semblables.

La figure 1 est une vue éclatée du dispositif de support selon l'invention montrant les deux parties dudit corps avant leur montage sur une structure portante conformée en tube.

La figure 2 montre la fixation desdites parties du dispositif audit tube.

La figure 3 illustre le montage desdits objets allongés sur le dispositif fixé audit tube.

La figure 4 représente une vue de dessus de l'une des parties identiques illustrée sur la figure 1.

La figure 5 est une vue en coupe de l'une des parties dudit corps selon la ligne V-V de la figure 1.

La figure 6 montre, en vue éclatée, une variante de réalisation du dispositif de support selon l'invention destiné à être fixé à une structure présentant une surface plane telle qu'un rail ou un profilé.

La figure 7 montre le dispositif de la figure 6 supportant lesdits objets allongés.

La figure 8 est une vue de dessus de la partie dudit corps conformée en embase.

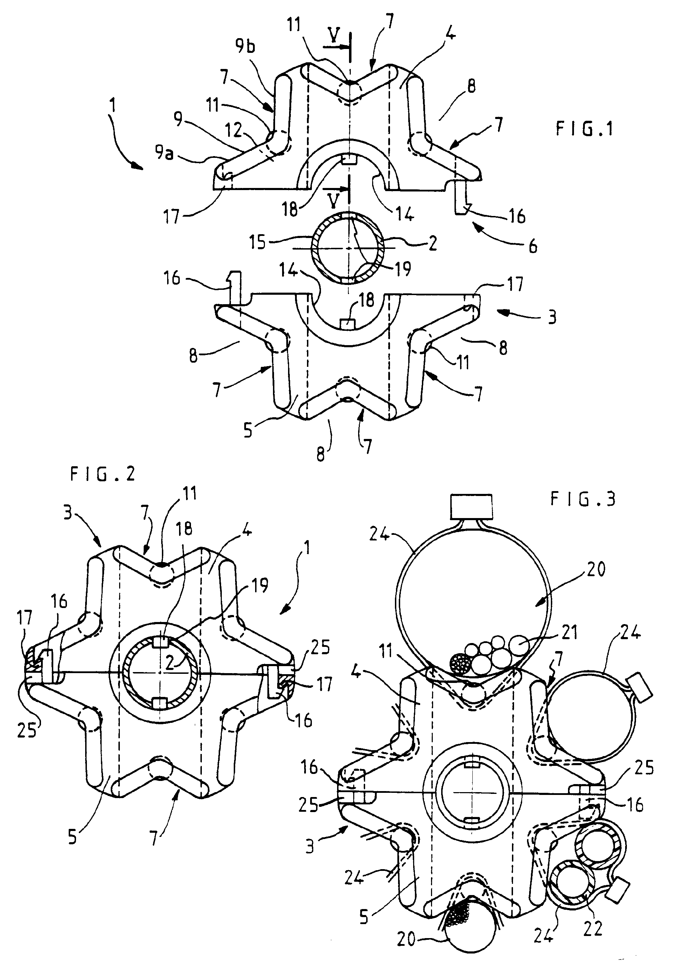

Le dispositif 1 selon l'invention, illustré par les figures 1 à 5, est destiné dans une première variante de réalisation à être monté sur une structure rigide conformée en un tube porteur métallique 2.

Ce dispositif 1 comprend un corps 3 constitué, selon l'invention, de deux parties 4 et 5 associables et solidarisables l'une à l'autre par l'intermédiaire de moyens de verrouillage 6 qui seront décrits ultérieurement. Dans l'application du dispositif à une structure en tube, les deux parties 4 et 5 sont avantageusement identiques, et sont par exemple obtenues par moulage. Elles peuvent être réalisées dans une matière plastique.

Chaque partie, ayant la forme approximative d'une demi-couronne, présente, dans ce cas particulier de réalisation, trois berceaux identiques 7, régulièrement répartis autour de l'axe de ladite demi-couronne ; chacun de ces berceaux 7 forme un logement 8 ouvert vers l'extérieur en ayant une forme en V, et qui sert d'appui transversal auxdits objets.

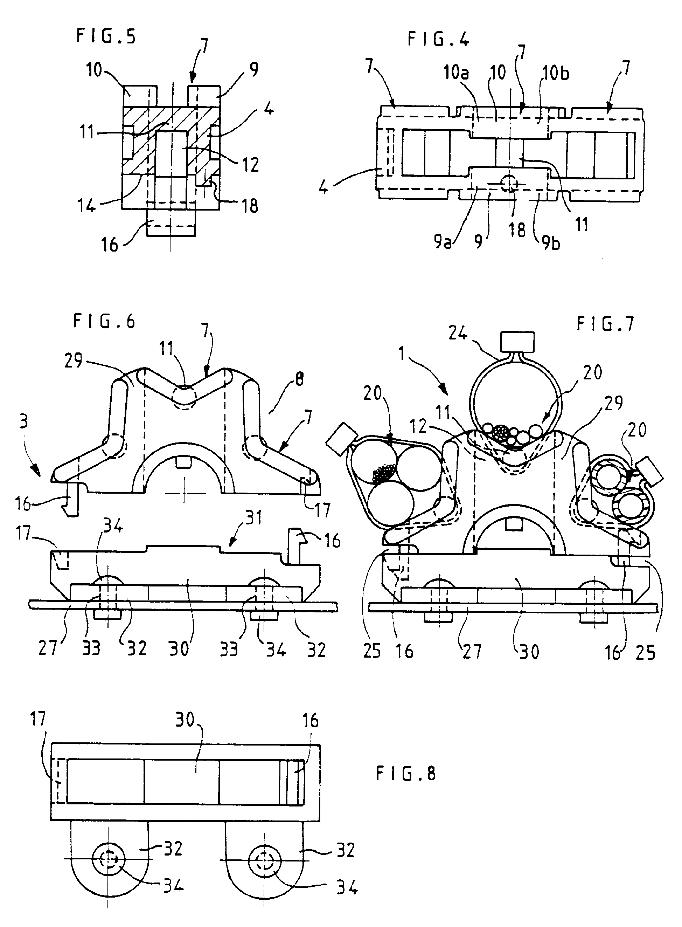

Comme le montrent les figures 4 et 5, chaque berceau 7 comporte deux faces 9 et 10 parallèles entre elles, et reliées entre elles par un fond 11 de section circulaire. Les faces 9 et 10 présentent chacune deux pans inclinés respectivement 9a,9b, et 10a,10b, formant les ailes du V du logement 8, et sur lesquels peuvent s'appuyer lesdits objets allongés. Le fond circulaire 11 reliant les faces 9 et 10 de chaque berceau 7 est réalisé de façon à ménager un espace libre 12 (figure 5) pour le passage d'un collier de serrage desdits objets, et à faire saillie, de l'autre côté (figure 1) au-delà de la pointe du logement 8 en V délimité par lesdits pans inclinés.

Chaque partie 4 et 5, obtenue par moulage, comporte une échancrure 14 de forme circulaire destinée à venir épouser le diamètre extérieur 15 du tube porteur 2 lors de leur mise en place autour de celui-ci.

Les moyens de verrouillage 6 desdites parties 4 et 5 sont constitués, dans un mode de réalisation particulièrement avantageux, par des crochets 16 élastiquement déformables susceptibles de venir coopérer avec des ergots de retenue 17. Comme elles sont identiques, chaque partie présente (figure 1) d'un côté, un crochet 16 élastiquement déformable, et de l'autre côté, un ergot de retenue. Ainsi, dans le cas illustré, le crochet 16 de la partie 4 viendra s'emboîter contre l'ergot de retenue 17 de la partie 5, et réciproquement.

Par ailleurs, un pion de centrage 18 est prévu sur chacune des parties 4 et 5, et émerge en saillie de l'échancrure circulaire 14. Ces pions de centrage 18 sont destinés à s'introduire dans des perçages correspondants 19 pratiqués dans le tube porteur 2, afin d'immobiliser le dispositif une fois verrouillé autour dudit tube.

Le montage du dispositif sur le tube porteur est réalisé en présentant de manière tête-bêche les deux parties 4 et 5 de part et d'autre du tube 2 jusqu'à ce que chaque crochet 16 élastiquement déformable se positionne puis se verrouille avec l'ergot de retenue 17 correspondant. Ainsi, le verrouillage proprement dit s'effectue par simple pression des deux parties l'une contre l'autre. Simultanément au verrouillage des parties 4 et 5, qui forment une fois assemblées le corps 3, les pions de centrage 18 s'introduisent dans les perçages correspondants 19 pratiqués dans le tube porteur 2. En conséquence, lorsque le verrouillage est réalisé, le dispositif 1 est immobilisé en rotation et axialement grâce auxdits pions.

Le dispositif 1 étant fixé audit tube 2, des objets allongés 20 peuvent être disposés sur les six berceaux 7 offerts par ledit corps 3. Chaque berceau reçoit alors soit un faisceau de câbles 21, soit des tuyauteries hydrauliques 22, etc..., comme il est illustré sur la figure 3.

Le maintien de ces objets 20 sur leur berceau respectif est assuré au moyen d'un collier de serrage 24 passant autour du fond circulaire 11 grâce à l'espace 12. Lors du serrage dudit collier, les câbles ou tuyauteries sont pressés contre les pans inclinés du berceau correspondant.

Le démontage du dispositif 1 par rapport au tube 2 en vue par exemple de son contrôle ne pose pas de difficultés puisque des encoches 25 sont prévues sur chaque partie 4 et 5, et permettent ainsi l'accès aux crochets 16 des moyens de verrouillage. Pour cela, un outil approprié (non représenté) est introduit dans chaque encoche 25 pour repousser les crochets 16 élastiquement déformables et les chasser des ergots de retenue 17.

Une variante de réalisation du dispositif 1 pour le support d'objets allongés est représentée sur les figures 6 à 8. Dans ce cas, la structure portante est conformée en un rail ou en un profilé 27, sur la surface duquel le dispositif est fixé.

Comme on le voit sur ces figures, le dispositif 1 comporte deux parties, une partie 29, identique aux parties 4 et 5 de la première réalisation, ainsi qu'une autre partie 30 conformée en embase.

L'embase 30 présente une forme sensiblement parallélépipèdique, et comporte sur sa face supérieure 31, avec laquelle vient en contact la partie 29, des moyens de verrouillage 6 identiques à ceux précédemment décrits. Ainsi, il est prévu sur l'embase 30 un crochet 16 élastiquement déformable et un ergot de retenue 17, avec lesquels sont susceptibles de venir coopérer respectivement l'ergot de retenue 17 et le crochet 16 de la partie 29 du corps.

L'embase comporte également deux languettes 32 percées chacune d'un trou 33 permettant le passage de rivets 34 pour sa fixation à la structure portante 27. L'embase 30 est par exemple obtenue par moulage.

Le montage de la partie 29 sur l'embase 30 s'effectue de façon analogue à celle décrite en regard de la précédente réalisation. La fixation des objets allongés 20 aux berceaux correspondants est obtenue par les colliers de serrage 24. Le démontage du corps 3, alors formé par la partie 29 et l'embase 30, est réalisé également au moyen d'un outil s'introduisant dans les encoches 25 ménagées dans la partie 29 et l'embase 30, ledit outil permettant de chasser les crochets 16 élastiquement déformables des ergots de retenue 17.

Un tel dispositif selon l'invention est particulièrement avantageux, puisqu'à partir de deux types de pièces différentes (une partie et une embase), on peut réaliser un dispositif s'adaptant à des structures portantes conformées soit en tube soit en rail, pour ensuite disposer lesdits objets allongés. Par ailleurs, le démontage s'effectue sans difficulté en agissant, pour cela, sur les moyens de verrouillage des parties dudit corps.

**Revendications**

1. Dispositif pour le support d'objets allongés, tels que câbles, faisceaux de câbles, tubes, gaines et analogues, du type comportant un corps (3) qui présente au moins un logement (8) ouvert vers l'extérieur et servant d'appui transversal auxdits objets (20), ledit corps (3) étant constitué de deux parties (4 et 5) associables et solidarisables l'une à l'autre,
caractérisé en ce que ledit logement (8) est formé par un berceau (7) définissant un V et associé à un moyen de serrage (24), tel qu'un collier, pour fixer lesdits objets, et lesdites parties (4 et 5) sont associables et solidarisables l'une à l'autre uniquement par l'intermédiaire de moyens de verrouillage élastiquement déformables comportant des crochets (16) élastiquement déformables prévus sur au moins l'une des deux parties dudit corps (3), et qui sont susceptibles de coopérer avec des ergots de retenue (17) correspondants, ménagés sur l'autre desdites parties.

2. Dispositif selon la revendication 1,
caractérisé en ce que les deux parties (4 et 5) du corps présentent des encoches (25) autorisant l'accès auxdits crochets (16) élastiquement déformables pour permettre la désolidarisation desdites parties.

3. Dispositif selon l'une des revendications 1 ou 2, destiné à être disposé sur un tube porteur métallique (2) ou analogue,
caractérisé en ce que ses deux parties (4 et 5) présentent chacune une échancrure (14) au moins partiellement circulaire épousant, lorsque les parties sont solidarisées l'une à l'autre, l'extérieur (15) dudit tube (2).

4. Dispositif selon l'une des revendications 1 à 3,
caractérisé en ce que ces deux parties (4 et 5) sont identiques, chacune d'elles présentant alors au moins un berceau (7) formant un logement (8) ouvert vers l'extérieur et servant d'appui transversal auxdits objets.

5. Dispositif selon l'une des revendications 3 ou 4,
caractérisé en ce qu'au moins l'une desdites parties comporte au moins un organe de positionnement (18) susceptible de venir coopérer, lors du montage de ladite partie, avec ledit tube (2).

6. Dispositif selon la revendication 5,
caractérisé en ce que ledit organe de positionnement est constitué par un pion de centrage (18) susceptible de s'introduire dans un perçage (19) correspondant pratiqué dans ledit tube.

7. Dispositif selon l'une des revendications 1 ou 2, destiné à être disposé sur une surface (27) sensiblement plane,
caractérisé en ce que l'une desdites parties (4 ou 5) est conformée en embase (30) fixée à ladite surface, et avec laquelle est susceptible de se solidariser l'autre partie (29) dudit corps (3) présentant ledit berceau (7).

**Patentansprüche**

1. Vorrichtung zum Halten von länglichen Gegenständen, wie z.B. Kabeln, Kabelbäumen, Rohren, Hülsen oder dergleichen, mit einem Körper (3), der wenigstens einen nach außen offenen und als seitliche Abstützung für die besagten Gegenstände (20) dienenden Sitz (8) aufweist, wobei der Körper (3) aus zwei einander zuordbaren und miteinander verbindbaren Teilen (4 und 5) aufgebaut ist,
dadurch gekennzeichnet, daß der Sitz (8) aus einem ein V definierenden und einem Klemmittel (24), wie einem Ring zur Befestigung der besagten Gegenstände, zugeordneten Sattel (7) gebildet wird, und daß die Teile (4 und 5) lediglich über elastisch verformbare Verriegelungsmittel mit elastisch verformbaren, an wenigstens einem der beiden Teile des Körpers (3) vorgesehenen Haken (16) zueinander zuordbar und miteinander verbindbar sind, die mit entsprechenden Haltenasen (17) auf dem anderen der besagten Teile zusammenwirken können.

2. Vorrichtung nach Anspruch 1,
dadurch gekennzeichnet, daß die beiden Teile (4 und 5) des Körpers Vertiefungen (25) aufweisen, die den Zugang zu den elastisch verformbaren Haken (16) zwecks Trennung der besagten Teile erlauben.

3. Vorrichtung nach einem der Ansprüche 1 oder 2 zur Anordnung auf einem metallischen Trägerrohr (2) oder dergleichen,
dadurch gekennzeichnet, daß die beiden Teile (4 und 5) jeweils eine Aussparung (14) aufweisen, die wenigstens teilweise kreisförmig ist und sich an das Äußere (15) des besagten Rohres (2) anschmiegt, wenn die Teile miteinander verbunden werden.

4. Vorrichtung nach einem der Ansprüche 1 bis 3,
dadurch gekennzeichnet, daß die beiden Teile (4 und 5) identisch sind, wobei jeder von ihnen wenigstens einen Sattel (7) aufweist, der einen nach außen offenen und als seitliche Stützte für die besagten Gegenstände dienenden Sitz (8) bildet.

5. Vorrichtung nach einem der Ansprüche 3 oder 4,
dadurch gekennzeichnet, daß wenigstens einer der besagten Teile wenigstens ein Positionierglied (18) aufweist, das beim Anbringen des besagten Teiles mit dem Rohr (2) zusammenwirken kann.

6. Vorrichtung nach Anspruch 5,
dadurch gekenzeichnet, daß das Positionierglied aus einem Zentrierstück (18) aufgebaut ist, das in eine entsprechende, im besagten Rohr ausgeführte Bohrung (19) eindringen kann.

7. Vorrichtung nach einem der Ansprüche 1 oder 2 zur Anordnung auf einer im wesentlichen ebenen Fläche (27),
dadurch gekennzeichnet, daß einer der besagten Teile (4 oder 5) als Sitzfläche (30), die an der besagten Fläche befestigt ist, gebildet wird und daß der andere, den Sattel (7) aufweisende Teil (29) des Körpers (3) mit dieser verbunden werden kann.

## Claims

1. Device for supporting elongated objects, such as cables, harness of cables, tubes, sheathes, and the like, of the type comprising a body (3) which has at least a housing (8) opened outwardly and used as transversal support to said objects (20), said body (3) being constituted of two parts (4 and 5) associable and fixable one another,
characterized in that said housing (8) is formed by a saddle (7) defining a V and associated with a clamping means, such as a collar, to fix said objects, and said parts (4 and 5) are associable and fixable one another only through elastically flexible locking means comprising elastically flexible hooks (16) provided on at least one of the two parts of said body (3), and which are capable of cooperating with corresponding holding pegs (17), arranged on the other of said parts.

2. Device according to claim 1,
characterized in that the two parts (4 and 5) of said body have notches (25) allowing access to said elastically flexible hooks (16) to permit the separation of said parts.

3. Device according to one of claims 1 or 2, intended to be disposed on a metallic carrier tube (2) or the like,
characterized in that its two parts (4 and 5) each present an opening (14) at least partially circular assuming the shape of the exterior (15) of said tube (2), when the parts are fixed together.

4. Device according to any of claims 1 to 3,
characterized in that these two parts (4 and 5) are identical, each of them then having at least a saddle (7) forming a housing (8) opened outwardly and used as transversal support to said objets.

5. Device according to any of claims 3 or 4,
characterized in that at least one of said parts comprises at least a positioning element (18) capable of cooperating with the tube (2), during the mounting of said part.

6. Device according to claim 5,
characterized in that the positioning element is constituted by a centering pin (18) capable of being introduced into a hole provided in said tube.

7. Device according to one of claims 1 or 2, intended to be disposed on a substantially planar surface (27),
characterized in that one of said parts (4 or 5) has the shape of a base plate (30) fixed to said surface, and to which the other part (29) of said body (3), having said saddle (7), is capable of being fixed.

FIG.1

FIG.2

FIG.3

FIG.5

FIG.4

FIG.6

FIG.7

FIG.8